# EUROPÄISCHE PATENTSCHRIFT

(11) **EP 2 920 493 B1**
(45) Veröffentlichungstag und Bekanntmachung des Hinweises auf die Patenterteilung: **20.02.2019**
(21) Anmeldenummer: 13779177.8
(22) Anmeldetag: 10.10.2013
(51) Int. Cl.: F16H 63/18, F16H 63/30, F16D 11/00

(54) **GETRIEBESCHALTEINRICHTUNG**
GEAR SHIFTING SYSTEM
SYSTÈME DE CHANGEMENT DE VITESSES

(30) Priorität: 19.11.2012 DE 102012221069
(43) Veröffentlichungstag der Anmeldung: 23.09.2015
(73) Patentinhaber: ZF Friedrichshafen AG, 88046 Friedrichshafen (DE)
(72) Erfinder: VOLPERT, Bastian, 88048 Friedrichshafen (DE)
(86) Internationale Anmeldenummer: PCT/EP2013/071177
(87) Internationale Veröffentlichungsnummer: WO 2014/075855

(56) Entgegenhaltungen:
- WO-A1-2011/072945
- WO-A1-2012/055386
- DE-A1- 19 627 980
- DE-A1-102009 002 661

## Beschreibung

Die Erfindung betrifft eine Getriebeschalteinrichtung, umfassend ein erstes, rotativ antreibbares Getriebebauteil, auf welchem drehfest und axial verschiebbar ein Schaltelement angeordnet ist, das axial in zumindest eine Schaltstellung bewegbar ist, in welcher jeweils das erste Getriebebauteil mit je einem benachbart zu diesem angeordneten und hieran anbindbaren Getriebebauteil drehfest gekoppelt ist, wobei eine jeweilige, axiale Schaltbewegung des Schaltelements in die zumindest eine Schaltstellung und/oder aus dieser heraus durch Zusammenspiel jeweils eines Schaltstifts mit jeweils mindestens einer zugehörigen, nutartigen Schaltkulisse auslösbar ist, die in axialer Richtung zumindest abschnittsweise veränderlich gestaltet ist. Die Erfindung betrifft des Weiteren ein Schaltelement für eine Getriebeschalteinrichtung.

Getriebeschalteinrichtungen kommen bei Stufengetrieben zur Anwendung, um Getriebebauteile des jeweiligen Getriebes zur Darstellung je eines zugehörigen Übersetzungsverhältnisses drehfest miteinander zu koppeln. Dabei ist einer Getriebeschalteinrichtung zumeist ein Schaltelement zugeordnet, das, je nach konkreter Ausgestaltung, eine kraft- oder formschlüssige Koppelung der jeweils zugeordneten Getriebebauteile bei Betätigung vornimmt. Das jeweilige Schaltelement ist dabei dann üblicherweise drehfest und axial verschiebbar auf einem der beiden drehfest zu verbindenden Getriebebauteile vorgesehen und wird mittels einer Aktuatorik axial in eine jeweilige Schaltstellung verschoben, in welcher die gewünschte, drehfeste Koppelung unter vorherigem Abbau einer eventuell vorherrschenden Drehzahldifferenz zwischen den beide Getriebebauteilen verwirklich ist. Je nach konkreter Ausgestaltung dieser Aktuatorik kann eine derartige axiale Schaltbewegung des jeweiligen Schaltelements dabei mechanisch, hydraulisch, pneumatisch, elektrisch oder auch durch Mischformen eingeleitet werden.

Aus der WO2011072945A1, welche alle Merkmale des Oberbegriffs des Anspruchs 1 offenbart, geht eine Schalteinrichtung für ein Zahnräderwechselgetriebe, mit mindestens einer Schiebemuffe, welche drehfest und axial verschiebbar auf einer Getriebewelle aufgesetzt ist. Zur Schiebemuffe ist zumindest auf einer Seite ein Losrad benachbart platziert, das frei rotierbar auf der Getriebewelle angeordnet ist. Zur Koppelung des Losrades mit der Getriebewelle wird die Schiebemuffe durch Betätigung von zugehörigen Stellmitteln aus einer Neutralstellung axial in Richtung des je einen Losrades in eine Schaltstellung bewegt.

Aus der WO2012055386A1 geht eine Schaltvorrichtung für ein Schaltgetriebe eines Fahrzeugs hervor, bei welchem ein Schaltelement ein Formschlusselement zur Erzeugung einer kraft- und drehmomentübertragenden Verbindung axial längs einer Längsache der Getriebewelle verschiebt.

Aus der DE 196 27 980 A1 geht eine Getriebeschalteinrichtung eines automatisierten Schaltgetriebes hervor, über welche ein erstes, rotativ antreibbares Getriebebauteil in Form einer Getriebewelle mit mehreren benachbart liegenden Getriebebauteilen jeweils gekoppelt werden kann. Vorliegend handelt es sich bei diesen weiteren Getriebebauteilen jeweils um Zahnräder, die drehbar auf dieser gelagert sind. Zudem sind auf der Getriebewelle mehrere Schaltelemente in Form von Schaltmuffen drehfest und axial verschiebbar angeordnet, wobei sich jede der Schiebemuffen aus je einem ringförmigen Körper zusammensetzt, welcher an einem Innenumfang mit einer axial verlaufenden Verzahnung versehen und über diese Verzahnung auf einer korrespondierenden Verzahnung seitens der radial innenliegenden Getriebewelle geführt ist.

Jede der Schiebemuffen kann nun jeweils axial zwischen je einer Neutralstellung, in welcher die jeweilige Schiebemuffe keines der beiden axial beiderseits liegenden Zahnräder mit der Getriebewelle koppelt, und je zwei Schaltstellungen bewegt werden, in welchen jeweils die Getriebewelle mit je einem Zahnräder unter einem vorherigen Abbau einer Differenzdrehzahl drehfest gekoppelt ist. Die axialen Schaltbewegungen der einzelnen Schiebemuffe werden vorliegend dabei über einen Elektromotor, zwischenliegende Übersetzungsstufen, sowie eine Schaltwalze im Zusammenspiel mit je einer der einzelnen Schiebemuffe zugeordneten Schaltgabel dargestellt. Hierbei wird über den Elektromotor mittels der zwischenliegenden Übersetzungsstufen einerseits ein Öffnen einer der Getriebewelle vorgeschalteten Trennkupplung und andererseits zeitgleich ein entsprechendes Verdrehen der Schaltwalze hervorgerufen.

Die Schaltwalze ist an einer radialen Außenseite mit nutartigen Schaltkulissen versehen, die in axialer Richtung jeweils zumindest abschnittsweise veränderlich gestaltet sind und in denen je ein Schaltstift der jeweiligen Schaltgabel läuft. Wird also die Schaltwalze über den Elektromotor mittels der zwischenliegenden Übersetzungsstufen in Drehbewegung versetzt, so ruft der in axialer Richtung veränderliche Verlauf der jeweiligen Schaltkulisse über den darin laufenden Schaltstift eine axiale Schiebebewegung der jeweiligen Schaltgabel hervor, was in eine entsprechende, axiale Verschiebung der je zugehörigen Schaltmuffe auf der Getriebewelle umgesetzt wird. In der Folge wird die jeweilige Schaltmuffe damit zwischen ihrer jeweiligen Neutralstellung und eine der möglichen Schaltstellungen axial bewegt. Die Schaltkulissen an der Schaltwalze sind dabei jeweils in axialer Richtung derartig veränderlich gestaltet, dass bei stetiger, über den Elektromotor eingeleiteter Drehbewegung ein aufeinanderfolgendes Schalten der einzelnen Gänge des automatisierten Schaltgetriebes bei jeweils geöffneter Trennkupplung stattfindet.

Ausgehend vom vorstehend beschriebenen Stand der Technik ist es nun die Aufgabe der vorliegenden Erfindung, eine Getriebeschalteinrichtung zur Verfügung zu stellen, über welche zumindest eine Schaltbewegung eines Schaltelements zur drehfesten Koppelung und/oder zur Trennung zweier ansonsten relativ zueinander verdrehbarer Getriebebauteile bei kompakten Aufbau realisiert werden kann.

Diese Aufgabe wird ausgehend vom Oberbegriff des Anspruchs 1 in Verbindung mit dessen kennzeichnenden Merkmalen gelöst.

Gemäß der Erfindung umfasst eine Getriebeschalteinrichtung ein erstes, rotativ antreibbares Getriebebauteil, auf welchem drehfest und axial verschiebbar ein Schaltelement angeordnet ist, das axial in zumindest eine Schaltstellung bewegt werden kann. In dieser zumindest einen Schaltstellung ist das erste Getriebebauteil dabei mit je einem hieran anbindbaren Getriebebauteil drehfest gekoppelt, welches benachbart zu dem ersten Getriebebauteil angeordnet und ansonsten relativ zu diesem verdrehbar ist. Zudem ist eine jeweilige, axiale Schaltbewegung des Schaltelements in die zumindest einen Schaltstellung und/oder aus dieser heraus durch Zusammenspiel jeweils eines Schaltstifts mit jeweils mindestens einer zugehörigen, nutartigen Schaltkulisse auslösbar, die in axialer Richtung zumindest abschnittsweise veränderlich gestaltet ist.

Im Sinne der Erfindung ist unter einem Getriebebauteil generell ein rotierbares oder auch feststehendes Bauteil des Getriebes zu verstehen, wie beispielsweise eine Getriebewelle, ein Zahnrad, ein Gehäuse oder ein Gehäuseteil, etc.. Insbesondere ist das jeweilige Getriebebauteil dabei, zumindest bei Schalten einzelner Gänge des Getriebes, an einer Leistungsübertragung zwischen einer Antriebs- und einer Abtriebsseite des Getriebes beteiligt. Während es sich bei dem ersten Getriebebauteil zwingend um ein rotativ antreibbares Getriebebauteil, wie eine Getriebewelle oder ein Zahnrad einer Übersetzungsstufe, handeln muss, kann das benachbart zu diesem liegende, hieran anbindbare Getriebebauteil erfindungsgemäß entweder ebenfalls als ein rotativ antreibbares Getriebebauteil ausgeführt sein, also beispielsweise als Getriebewelle oder als drehbar gelagertes Stirnrad, oder aber auch als feststehendes Bauteil in Form eines Getriebegehäuses oder eines Getriebegehäuseteils vorliegen. Im Fall der ersten Variante rotieren die beiden Getriebebauteile dann nach der drehfesten Koppelung gemeinsam, während im zweitgenannten Fall das erste Getriebebauteil bei drehfester Verbindung mit dem anbindbaren Getriebebauteil an diesem festgesetzt wird.

Das Schaltelement kann im Sinne der Erfindung hierbei direkt an der drehfesten Verbindung des ersten Getriebebauteils mit dem anbindbaren Getriebebauteil beteiligt sein, indem es bei seiner axialen Verschiebung in die jeweilige Schaltstellung selbst mit dem anbindbaren Getriebebauteil in Verbindung tritt, also selbst ein Drehmoment von dem ersten Getriebebauteil auf das anbindbare Getriebebauteil überträgt. Hierbei kann das anbindbare Getriebebauteil zur drehfesten Koppelung mit einem zusätzlichen Bauteil, beispielsweise in Form eines Kupplungskörpers, versehen sein, mit welchem das Schaltelement des ersten Getriebebauteils bei seiner Überführung in die Schaltstellung drehfest in Kontakt tritt. Alternativ dazu kann das weitere, anbindbare Getriebebauteil aber auch mit einem eigenen Schaltelement versehen sein, welches ebenfalls drehfest und axial verschiebbar auf Seiten des anbindbaren Getriebebauteils vorgesehen ist und zur drehfesten Koppelung der beiden Getriebebauteile zeitgleich mit dem, seitens des ersten Getriebebauteils vorgesehenen Schaltelements in eine zugehörige Schaltstellung zu bewegen ist, in welcher es dann mit dem Schaltelement des ersten Getriebebauteils drehfest gekoppelt wird.

Alternativ zu den vorgenannten Möglichkeiten kann es sich bei dem Schaltelement jedoch auch um ein Bauteil handeln, welches nicht direkt die Koppelung der beiden Getriebebauteile vollzieht, sondern diese drehfeste Verbindung nur einleitet, ohne hierbei selber ein Drehmoment zu übertragen. So ist eine Ausführung des Schaltelements als Schieberkolben denkbar, welcher bei Überführung in eine Schaltstellung weitere, mit den zu koppelnden Getriebebauteile verbundene Bauteile, wie beispielsweise zwei Lamellensätze eines Lamellenpakets, aufeinander drückt und hierüber die Koppelung der Getriebebauteile hervorruft.

Schließlich kann die erfindungsgemäße Getriebeschalteinrichtung entweder als einfache Schalteinrichtung ausgeführt sein, bei welcher das zugehörige Schaltelement aus einer Neutralstellung nur in eine Schaltstellung bewegt werden kann, oder aber auch als Doppelschalteinrichtung realisiert sein, bei welcher das zugehörige Schaltelement aus der Neutralstellung heraus axial sowohl in eine erste Richtung als auch in eine zweite Richtung in jeweils eine Schaltstellung verschoben werden kann und hierbei eine drehfeste Kopplung des ersten Getriebebauteils mit jeweils einem benachbart liegenden, anbindbaren Getriebebauteil vornimmt. Des Weiteren ist auch eine Ausgestaltung im Rahmen der Erfindung denkbar, bei welcher lediglich zwischen zwei Schaltstellungen gewechselt werden kann, also keine Neutralstellung des Schaltelements möglich ist.

Beispielhaft weist ein Schaltelement einer Getriebeschalteinrichtung insbesondere einen ringförmigen Körper auf, welcher an einem Innenumfang mit einer axial verlaufenden Verzahnung versehen ist, über die der Körper drehfest und axial verschiebbar über eine korrespondierende Verzahnung auf einem radial innenliegenden Getriebebauteil geführt werden kann. Besonders bevorzugt bildet der ringförmige Körper einen Kreisring und ist durch ein einziges Element gebildet, wobei im Rahmen der Erfindung auch ein Zusammensetzen des Körpers aus mehreren Einzelteilen prinzipiell denkbar ist. Diese Einzelteile sind dann zumindest drehfest miteinander zu verbinden.

Prinzipiell kann das erfindungsgemäße Schaltelement des Weiteren derartig ausgestaltet sein, dass es in einer Getriebeschalteinrichtung bei axialer Verschiebung in eine Schaltstellung eine formschlüssige oder eine kraftschlüssige Koppelung zweier Getriebebauteile hervorruft. So kann dieses Schaltelement als Klauenmuffe einer Klauenkupplung oder Klauenbremse, als Schiebemuffe einer Sperrsynchronisation, oder ähnlich aufgebautes Bauteil ausgeführt sein, welches nach Abbau einer eventuell vorhandenen Differenzdrehzahl zwischen den beiden Getriebebauteilen die formschlüssige Koppelung vornimmt. Ein Abbau einer Differenzdrehzahl kann dabei entweder rein durch einen Zahneingriff des Schaltelements mit einem seitens des Weiteren Getriebebauteils vorgesehenen Element bewerkstelligt oder mithilfe zwischenliegender Bauteile, wie Synchronringe, hervorgerufen werden. Zudem kann es sich bei dem Schaltelement auch um einen Kolbenschieber handeln, welcher bei Verschiebung Kupplungshälften einer kraftschlüssigen Kupplung oder Bremse, wie einer Lamellenkupplung bzw. - bremse, zusammendrückt.

Die Erfindung umfasst nun die technische Lehre, dass das Schaltelement an einem Außendurchmesser die mindestens eine zugehörige Schaltkulisse aufweist, während der jeweils eine Schaltstift radial verschiebbar und der mindestens einen Schaltkulisse radial gegenüberliegend an einem benachbart zum Schaltelement liegenden Getriebebauteil angeordnet ist. Ferner wird der jeweils eine Schaltstift über einen zugehörigen Aktuator jeweils radial zwischen einer Grundstellung und einer Eingriffsstellung bewegt, in welcher er in die mindestens eine zugehörige Schaltkulisse eingeführt werden kann.

Mit anderen Worten sind also der jeweils eine Schaltstift und die mindestens eine zugehörige, nutartige Schaltkulisse radial gegenüberliegend zwischen dem Schaltelement und einem hierzu benachbart liegenden Getriebebauteil vorgesehen. Werden verschiedene axiale Schaltbewegungen des Schaltelements durch ein derartiges Zusammenspiel je eines Schaltstifts mit mindestens einer zugehörigen Schaltkulisse eingeleitet, so sind erfindungsgemäß seitens des Schaltelements und eines radial benachbarten Getriebebauteils mehrere aus je einem Schaltstift und je einer Schaltkulisse gebildete Paare vorgesehen.

Die jeweils zugehörige axiale Schaltbewegung wird dabei dadurch ausgelöst, dass der jeweilige, über einen zugehörigen Aktuator radial bewegliche Schaltstift in die mindestens eine zugehörige Schaltkulisse eingeführt wird, so dass entsprechend des in axialer Richtung veränderlichen Verlaufs der Schaltkulisse eine axiale Verschiebung des Schaltelements relativ zu dem benachbart liegenden Getriebebauteil hervorgerufen wird. Da diese axiale Schaltbewegung erst bei radialer Verschiebung des jeweiligen Schaltstifts aus der Grundstellung in die Eingriffsstellung stattfindet, kann diese axiale Schaltbewegung des Schaltelements gezielt über den Aktuator eingeleitet werden. Gleichzeitig ist die Anordnung des Schaltstifts mit Aktuator und das Vorsehen der Schaltkulisse auf kompakte Art und Weise möglich. Bevorzugt handelt es sich bei dem Aktuator dabei um einen elektrischen Aktuator, so dass im Vergleich zu einer mechanischen oder auch einer hydraulischen Aktuatorik eine Steuerung des Schaltelements bei geringem Gewicht und geringem Bauraumbedarf möglich ist. Insgesamt lässt sich die erfindungsgemäße Getriebeschalteinrichtung damit platzsparend im Bereich eines Getriebes realisieren, wobei hierbei auch mehrere Schaltelemente jeweils über je eine derartig gestaltete Getriebeschalteinrichtung problemlos unabhängig voneinander gesteuert werden können.

Im Unterschied hierzu laufen bei der DE 196 27 980 A1 die jeweils seitens der Schaltgabeln vorgesehenen Schaltstifte permanent in den je zugehörigen Schaltkulissen, die auf einer radialen Außenseite der Schaltwalze ausgestaltet sind. Infolge dessen kann das einzelne Schaltelement nicht individuell aus einer Neutralstellung in eine Schaltstellung verschoben werden, da axiale Schaltbewegungen der Schaltelemente stets starr entsprechend der Verdrehung der Schaltwalze und der jeweiligen Gestaltung der Schaltkulissen vorgenommen wird. Ein Schalten der Gangstufen des automatisierten Kraftfahrzeuggetriebes der DE 196 27 980 A1 erfolgt also entsprechend einer starr vorgegebenen Schaltabfolge, so dass beispielsweise ein Überspringen eines oder mehrerer Gänge nicht möglich ist. Damit ist dieser Aufbau nur für die Verwendung bei einem automatisierten Schaltgetriebe geeignet. Ferner setzt die Unterbringung der aus Elektromotor, Übersetzungsstufen und Schaltwalze gebildeten Aktuatorik einen entsprechenden Bauraum voraus, so dass eine kompakte Betätigung der Schaltelemente im Falle der DE 196 27 980 A1 nicht möglich ist.

Dem Fachmann wird vorliegend klar sein, dass es bei der erfindungsgemäßen Getriebeschalteinrichtung zur Einleitung einer axialen Bewegung des Schaltelements bis zu dessen Überführung in die zumindest eine Schaltstellung stets einer Relativdrehzahl zwischen dem den Schaltstift tragenden Bauteil und dem mit der nutartigen Schaltkulisse versehenen Bauteil bedarf, da ansonsten das Einfassen des Schaltstifts in die zugehörige Schaltkulisse nicht in eine axiale Schiebebewegung umgesetzt wird. Dies hat zur Folge, dass eine Schaltbewegung des Schaltelements bei Stillstehen des ersten Getriebebauteils nicht vollzogen werden kann, sofern nicht gerade das gegenüberliegende Getriebebauteil, welches entweder den jeweils einen Schaltstift oder die mindestens eine, zugehörige Schaltkulisse aufweist, eine Drehbewegung ausführt. Des Weiteren ist eine erfindungsgemäße Getriebeschalteinrichtung bei einem Kraftfahrzeuggetriebe zumindest bei Anfahrgängen antriebsseitig vorzusehen, da zu Beginn eines Anfahrvorganges des Kraftfahrzeuges sich eine Abtriebsseite des jeweiligen Kraftfahrzeuggetriebes im Stillstand befindet. Generell ist eine erfindungsgemäße Getriebeschalteinrichtung aber ansonsten bei sämtlichen Stufengetrieben und hierbei insbesondere bei Kraftfahrzeuggetrieben problemlos anwendbar.

Entsprechend der Erfindung sind der jeweils eine Schaltstift und der zugehörige Aktuator an einem radial umliegend zum Schaltelement platzierten Gehäuse vorgesehen. Das Vorsehen des oder der Schaltstifte, sowie des oder auch der mehreren Aktuatoren auf Seiten eines Gehäuses hat dabei den Vorteil, dass diese Komponenten damit seitens eines feststehenden Teils vorgesehen sind und damit die Zuführung von Steuerleitungen zu dem zugehörigen Aktuator einfach gestaltet werden kann. So können im Falle der Ausgestaltung des Aktuators als elektronischer Aktuator elektrische Leitungen problemlos in den Bereich des Aktuators herangeführt werden. Ferner bewirkt die Anordnung des jeweils einen Schaltstifts auf Seiten eines Gehäuses, dass bei Rotation des ersten Getriebebauteils stets eine Relativdrehzahl zwischen dem jeweils einen Schaltstift und der auf Seiten des Schaltelements vorgesehenen Schaltkulisse besteht. Abgesehen davon kann der jeweils eine Schaltstift und der zugehörige Aktuator aber auch auf Seiten des rotierbaren Schaltelements oder an einem rotierbaren Getriebebauteil vorgesehen sein, wobei dann Steuer- und Versorgungsleitungen des Aktuators auf das jeweils drehende Bauteil zu führen sind.

Erfindungsgemäß trägt das Gehäuse einen ersten und einen zweiten Schaltstift, von denen jedem je ein Schaltkulissenpaar seitens des Schaltelements zugeordnet ist. Jedes dieser Schaltkulissenpaare setzt sich aus je zwei aneinander anknüpfenden Schaltkulissen zusammen, die jeweils in den Außendurchmesser des Schaltelements eingebracht sind. Dabei kann über den ersten Schaltstift im Zusammenspiel mit einer ersten Schaltkulisse des zugeordneten, ersten Schaltkulissenpaares eine axiale Verschiebung des Schaltelements aus einer ersten Schaltstellung heraus in eine Neutralstellung, sowie im Zusammenspiel des ersten Schaltstifts mit einer zweiten Schaltkulisse des ersten Schaltkulissenpaares eine weitere axiale Verschiebung aus der Neutralstellung in eine zweite Schaltstellung hervorgerufen werden. Hingegen ist mittels des zweiten Schaltstifts im Zusammenspiel mit einer ersten Schaltkulisse des zugeordneten, zweiten Schaltkulissenpaares eine axiale Bewegung des Schaltelements aus der zweiten Schaltstellung heraus in die Neutralstellung, sowie im Zusammenspiel des zweiten Schaltstifts mit einer zweiten Schaltkulisse des zweiten Schaltkulissenpaares eine weitere axiale Verschiebung aus der Neutralstellung in die erste Schaltstellung darstellbar. In der Folge können damit axiale Bewegungen des Schaltelements zwischen seinen beiden Schaltstellungen und seiner Neutralstellung, in welcher eine drehfeste Koppelung des ersten Getriebebauteils mit hieran anbindbaren Getriebebauteilen unterbleibt, auf kompakte Weise gesteuert werden.

Hierbei sind die Schaltkulissenpaare gegensätzlich zueinander verlaufend auszugestalten, so dass bei gleichbleibender Drehrichtung des Schaltelements über den ersten Schaltstift im Zusammenspiel mit dem ersten Schaltkulissenpaar eine axiale Verschiebung des Schaltelements in eine erste axiale Richtung, durch den zweiten Schaltstift aber gemeinsam mit dem zweiten Schaltkulissenpaar eine axiale Verschiebung in eine zur ersten entgegengesetzt orientierte, zweite axiale Richtung eingeleitet werden kann. Bevorzugt sind die Schaltkulissen der beiden Schaltkulissenpaare dabei derartig aneinander anknüpfend in den Außendurchmesser des Schaltelements eingebracht, dass jede Schaltkulisse an ihren jeweiligen beiden Enden jeweils über Übergangsbereiche stetig in den Außendurchmesser des Körpers übergeht. Hierdurch kann der jeweilige Schaltstift auch dann in die jeweilige Schaltkulisse problemlos einlaufen, wenn dieser Schaltstift und der Beginn der jeweiligen Schaltkulisse zu Beginn der Überführung des Schaltstifts in die Eingriffsstellung in Umfangsrichtung zunächst nicht überdecken.

Unter zwei aneinander anknüpfenden Schaltkulissen ist im Sinne der Erfindung zu verstehen, dass bei einem Schaltkulissenpaar ein Ende der einen Schaltkulisse einem Ende der anderen Schaltkulisse gegenüberliegt. In der Folge kann der jeweils zugehörige Schaltstift nach Verlassen der einen Schaltkulisse, sofern er in seiner Eingriffsstellung ausgefahren bleibt, direkt in die folgende Schaltkulisse des Schaltkulissenpaares einfassen, so dass das Schaltelement direkt von der einen Schaltstellung in die andere Schaltstellung verschoben und die Neutralstellung nur überfahren wird.

Die Schaltkulissen eines Schaltkulissenpaares können im Rahmen der Erfindung jedoch auch derartig auf dem Außendurchmesser ausgebildet sein, dass im Zusammenspiel mit dem jeweiligen Schaltstift axiale Bewegungen des Schaltelements zwischen der Neutralstellung und einer der Schaltstellungen dargestellt werden können. In diesem Fall bewirkt also das Einfassen des jeweiligen Schaltstifts in eine erste Schaltkulisse des jeweiligen Schaltkulissenpaares eine Verschiebung aus der Neutralstellung in die jeweilige Schaltstellung, während durch Einfassen des gleichen Schaltstifts in eine zweite Schaltkulisse des gleichen Schaltkulissenpaares eine Rückbewegung des Schaltelements in die Neutralstellung hervorgerufen wird. Zudem kann einem Schaltstift auch nur eine einzige Schaltkulisse zugeordnet sein, welche im Zusammenspiel mit dem Schaltstift nur eine Verschiebung des Schaltelements zwischen beiden Schaltstellungen ermöglicht. Ein Anfahren der zwischenliegenden Neutralstellung wäre im letztgenannten Fall dann nur möglich, wenn der Schaltstift in der Neutralstellung aus der Kulisse gezogen wird.

Beispielhaft verfügt das Schaltelement an zumindest einer axialen Stirnseite über je eine Klaueninnenverzahnung. Diese je eine Klaueninnenverzahnung steht in der zumindest einen Schaltstellung des Schaltelements im Zahneingriff mit einer Verzahnung, welche der je einen Klaueninnenverzahnung zugewandt an jeweils einem Kupplungskörper ausgestaltet ist, der mit dem je einen anbindbaren Getriebebauteil drehfest verbunden ist. Das Schaltelement ist also in diesem Fall als Schaltmuffe ausgestaltet, die in der Schaltstellung eine formschlüssige Koppelung des ersten Getriebebauteils mit dem anbindbaren Getriebebauteil über den je einen Kupplungskörper herstellt.

Zur Ausbildung dieser Schaltmuffe schließt sich die Klaueninnenverzahnung dabei an einer axialen Stirnseite insbesondere an die axial verlaufende Verzahnung an, die am Innenumfang des Körpers des Schaltelements vorgesehen ist. Besonders bevorzugt setzt sich der Körper des Schaltelements dabei aus einem die axial verlaufende Verzahnung aufweisenden Grundteil und je einem Schiebestück zusammen, wobei das je eine Schiebestück dem Grundteil auf Seiten der zumindest einen Stirnseite vorgesetzt und an einem Innendurchmesser mit der je einen Klaueninnenverzahnung versehen ist. Des Weiteren sind der Grundteil und das je eine Schiebestück drehfest miteinander gekoppelt und können über je ein zwischenliegendes Federelement axial relativ zueinander bewegt werden. Die Unterteilung des Schaltelements in einen Grundteil und je ein die Klaueninnenverzahnung ausbildendes Schiebestück, sowie die Koppelung dieser beiden Elemente über je ein zwischenliegendes Federelement hat dabei den Vorteil, dass durch die axiale Beweglichkeit des je einen Schiebestücks Schalteffekte, wie Hochschaltkratzen, Prellen, o.ä., und die hierdurch auftretenden Stöße kompensiert werden können.

In Weiterbildung der Erfindung ist axial zwischen dem jeweils einen Kupplungskörper und dem Schaltelement je ein Synchronring vorgesehen, welcher mit einer der Klaueninnenverzahnung zugewandten Sperrverzahnung versehen und über je einen Reibkonus mit je einem korrespondierenden Reibkonus des jeweils einen Kupplungskörpers in Kontakt bringbar ist. Durch den zwischen Schaltelement und Kupplungskörper jeweils sitzenden Synchronring wird damit eine Getriebeschalteinrichtung nach Art einer Sperrsynchronisation ausgebildet, bei welcher eine drehfeste Verbindung des ersten Getriebebauteils und des je einen anbindbaren Getriebebauteils erst nach einem Abbau von Drehzahldifferenzen vollzogen wird. Die Drehzahldifferenz wird hierbei auf dem Fachmann bekannte Art und Weise durch den Kontakt der Reibkonen von Synchronring und Kupplungskörper abgebaut.

Es ist eine Weiterbildung der Erfindung, dass das erste Getriebebauteil eine Getriebewelle ist, auf welcher zwei die jeweils anbindbaren Getriebebauteile bildenden Zahnräder drehbar gelagert sind, wobei jedes der Zahnräder mit je einem Kupplungskörper drehfest gekoppelt ist, über welchen in je einer zugeordneten Schaltstellung des Schaltelements je ein Zahneingriff mit dem Schaltelement hergestellt ist. In diesem Fall sind also zwei anbindbare Getriebebauteile in Form der beiden Zahnräder vorgesehen, welche jeweils über das Schaltelement mit der Getriebewelle verbunden werden können.

Die Bezugnahme des Anspruchs auf die Zeichnungen durch Verwendung von Bezugszeichen soll den Schutzumfang des Anspruchs nicht beschränken.

Weitere, die Erfindung verbessernde Maßnahmen werden nachstehend gemeinsam mit der Beschreibung einer bevorzugten Ausführungsform der Erfindung näher dargestellt, welche Bezug auf die in den Figuren dargestellten Zeichnungen nimmt. Es zeigen:
- Fig. 1A bis 1I: schematische Ansichten einer Getriebeschalteinrichtung gemäß einer ersten bevorzugten Ausführungsform der Erfindung, gezeigt in unterschiedlichen Schaltzuständen der Getriebeschalteinrichtung;
- Fig. 2: ein Diagramm, aus welchem qualitative Verläufe von Schaltkulissenpaaren der Getriebeschalteinrichtung gemäß Fig. 1A bis 1I ersichtlich sind;
- Fig. 3: ein Diagramm, welches qualitativ eines Verlauf eines Durchmessers eines Körpers eines Schaltelements zeigt;
- Fig. 4: eine schematische Ansicht einer Getriebeschalteinrichtung gemäß einer zweiten bevorzugten Ausführungsform der Erfindung.

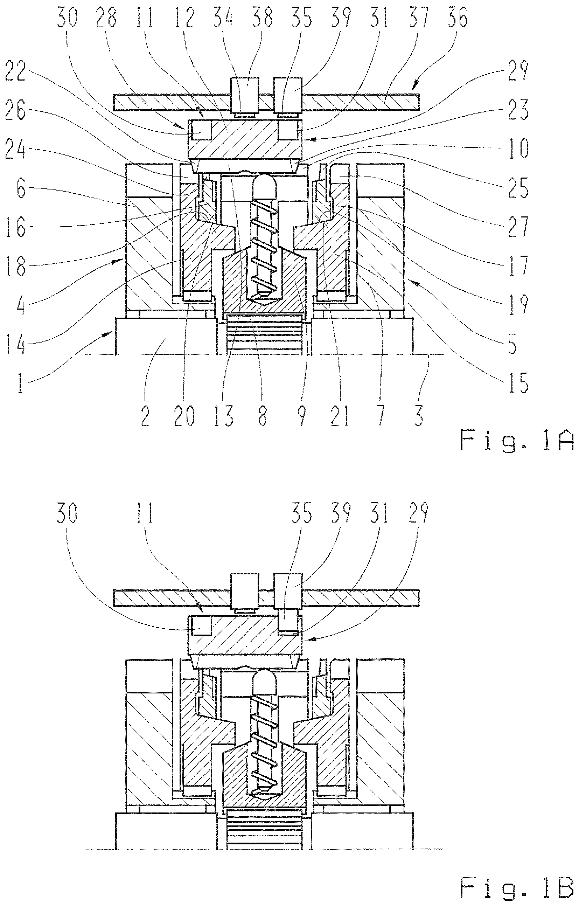

Aus den Fig. 1A bis 1I geht jeweils eine schematische Ansicht einer Getriebeschalteinrichtung gemäß einer ersten bevorzugten Ausführungsform der Erfindung hervor, wobei es sich bei dieser Getriebeschalteinrichtung um eine Schalteinrichtung eines Stufengetriebes, insbesondere eines automatisierten PKW-Handschaltgetriebes, handelt. In den Fig. 1A bis 1F sind hierbei einzelne Schaltzustände dieser Getriebeschalteinrichtung dargestellt, wobei im Folgenden nun zunächst der prinzipielle Aufbau der Getriebeschalteinrichtung anhand der Fig. 1A beschrieben werden soll:

Wie aus Fig. 1A zu erkennen ist, umfasst die Getriebeschalteinrichtung hierbei ein erstes Getriebebauteil 1, in Form einer Getriebewelle 2, welche um eine Rotationsachse 3 rotierbar angeordnet ist und die hierbei zwei weitere Getriebebauteile 4 und 5 trägt. Dabei handelt es sich bei den beiden Getriebebauteilen 4 und 5 um zwei Zahnräder 6 und 7, welche jeweils koaxial zu der Rotationsachse 3 drehbar auf die Getriebewelle 2 aufgesetzt sind und einzeln mit der Getriebewelle 2 drehfest verbunden werden können, um eine Drehbewegung der Getriebewelle 2 mit einem bestimmten Übersetzungsverhältnis mit einer Drehbewegung einer - vorliegend nicht weiter dargestellten - achsversetzt verlaufenden Getriebewelle des Getriebes zu koppeln.

Axial zwischen den Zahnrädern 6 und 7 ist die Getriebewelle 2 des Weiteren mit einer Mitnahmeverzahnung 8 versehen, über welche ein Synchronkörper 9 drehfest und axial starr mitgeführt wird. Dieser Synchronkörper 9 wiederum bildet auf einer radialen Außenseite eine Verzahnung 10 aus, auf welcher ein Schaltelement 11 drehfest, aber axial verschiebbar zur Getriebewelle 2 angeordnet ist. Dieses Schaltelement 11 weist hierbei einen ringförmigen, einstückigen Körper 12 auf, der an einem Innenumfang mit einer zur Verzahnung 10 korrespondierenden Verzahnung 13 ausgestattet ist.

Axial zwischen dem Synchronkörper 9, sowie dem Schaltelement 11 einerseits und dem jeweiligen Zahnrad 4 bzw. 5 andererseits sind zudem jeweils ein Kupplungskörper 14 bzw. 15 und jeweils ein Synchronring 16 bzw. 17 vorgesehen. Dabei ist der jeweilige Kupplungskörper 14 bzw. 15 starr mit dem jeweiligen Zahnrad 4 bzw. 5 verbunden, während der jeweilige Synchronring 16 bzw. 17 axial beweglich und um ein bestimmtes Maß gegenüber dem Synchronkörper 9 verdrehbar zwischen Synchronkörper 9 und dem jeweiligen Kupplungskörper 14 bzw. 15 liegt. Des Weiteren ist jeder der Synchronringe 14 und 15 an einem Innenumfang mit je einem Reibkonus 18 bzw. 19 ausgestattet, über welchen der jeweilige Synchronring 16 bzw. 17 an je einem korrespondierend gestalteten Reibkonus 20 bzw. 21 des jeweiligen Kupplungskörpers 14 bzw. 15 anlaufen kann.

Wie ferner in Fig. 1A zu erkennen ist, ist das Schaltelement 11 als Schiebemuffe ausgeführt und hierbei auf beiden den Zahnrädern 6 und 7 zugewandten Stirnseiten jeweils mit je einer Klaueninnenverzahnung 22 bzw. 23 versehen, wobei Dachschrägen dieser Klaueninnenverzahnungen 22 und 23 jeweils axial in Richtung des jeweils gegenüberliegenden Zahnrades 4 bzw. 5 orientiert sind. Radial auf derselben Höhe wie die Klaueninnenverzahnungen 22 und 23 sind zudem an den Synchronringen Sperrverzahnungen 24 und 25, sowie an den Kupplungskörpern 14 und 15 Verzahnungen 26 und 27 ausgestaltet, wobei die Verzahnung 26 und die Sperrverzahnung 24 hierbei korrespondierend zu der Klaueninnenverzahnung 22 und die Verzahnung 27 und die Sperrverzahnung 25 korrespondierend zu der Klaueninnenverzahnung 23 gestaltet sind.

Insgesamt ist die erfindungsgemäße Getriebeschalteinrichtung hierdurch nach Art einer Sperrsynchronisation ausgebildet, bei welcher bei Verschiebung des Schaltelements 11 aus einer Neutralstellung heraus in eine axiale Richtung zunächst der dort jeweils liegende Synchronring 16 bzw. 17 in eine Sperrstellung verdreht wird und das Schaltelement über seine Sperrverzahnung 24 bzw. 25 erst einmal an einer Weiterbewegung hindert. Durch den Kontakt der jeweiligen Sperrverzahnung 24 bzw. 25 mit der zugehörigen Klaueninnenverzahnung 22 bzw. 23 wird der jeweilige Synchronring 16 bzw. 17 dabei mit seinem jeweiligen Reibkonus 18 bzw. 19 auf den ihm zugewandten Reibkonus 20 bzw. 21 des jeweiligen Kupplungskörpers 14 bzw. 15 gedrückt, wobei durch die hierbei auftretende Reibung die relativ zueinander rotierenden Gruppen Zahnrad 5 bzw. 6 und Kupplungskörper 14 bzw. 15 auf der einen Seite und Getriebewelle 2, Synchronkörper 9, Schaltelement 11 und Synchronring 16 bzw. 17 auf der anderen Seite in ihrer Drehzahl aneinander angeglichen werden.

Nach Drehzahlangleichung kann das Schaltelement 11 den jeweiligen Synchronring 16 bzw. 17 über die Dachschrägen der jeweiligen Sperrverzahnung 24 bzw. 25 verdrehen und in der Folge mit der Klaueninnverzahnung 22 bzw. 23 und der Verzahnung 13 in Zwischenräume der Sperrverzahnung 24 bzw. 25 einlaufen. Durch Zahneingriff mit der zugehörigen Verzahnung 26 bzw. 27 des jeweiligen Kupplungskörpers 14 bzw. 15 wird dann eine formschlüssige Verbindung zwischen dem Schaltelement 11 und dem jeweiligen Kupplungskörper 14 bzw. 15 und damit auch zwischen der Getriebewelle 2 und dem jeweiligen Zahnrad 6 bzw. 7 ausgebildet. Unter Umständen muss im Vorfeld dabei eine sich erneut während der Freiflugphase des Schaltelements 11 einstellende Drehzahldifferenz über die Dachschrägen der jeweiligen Klaueninnenverzahnung 22 bzw. 23 und der Verzahnung 26 bzw. 27 abgebaut oder auch der jeweilige Kupplungskörper 14 bzw. 15 mitsamt dem zugehörigen Zahnrad 6 bzw. 7 verdreht werden.

Um nun axiale Schaltbewegungen des Schaltelements 11 zwischen einer Neutralstellung und zwei Schaltstellungen, in welchen jeweils die jeweilige Klaueninnenverzahnung 22 bzw. 23 im Zahneingriff mit der ihr je zugewandten Verzahnung 26 bzw. 27 steht, und jeweils zurück darstellen zu können, ist das Schaltelement 11 an einem Außendurchmesser seines Körpers 12 mit zwei Schaltkulissenpaaren 28 und 29 versehen, welche sich jeweils aus je einer ersten, nutartigen Schaltkulisse 30 bzw. 31 und je einer zweiten, nutartigen Schaltkulisse 32 bzw. 33 zusammensetzen. Die beiden Schaltkulissen 30 und 32 bzw. 31 und 33 eines Schaltkulissenpaares verlaufen dabei aneinander anknüpfend am Außendurchmesser des Körpers 12, so dass in den Fig. 1A bis Fig. 1I je nach dargestellter Verdrehung des Schaltelements nur jeweils eine der beiden Schaltkulissen 30 oder 32 bzw. 31 oder 33 zu erkennen ist.

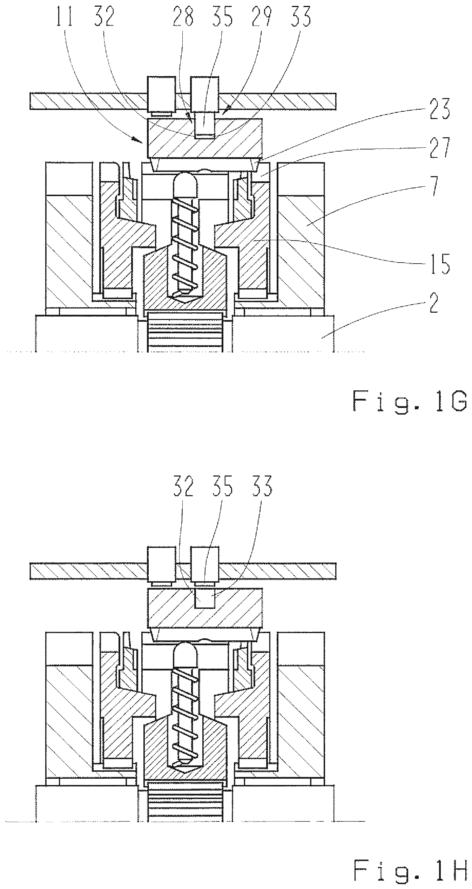

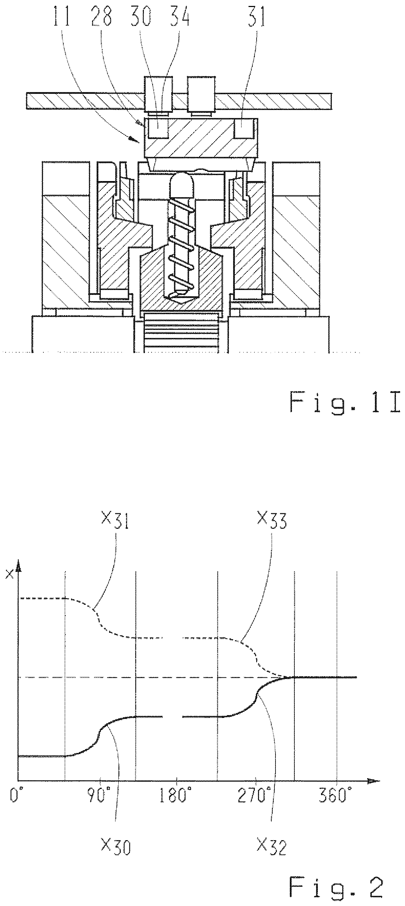

Die Schaltkulissen 30 bis 33 weisen jeweils je einen in axialer Richtung veränderlich gestalteten Abschnitt auf, der hierbei aufgrund des Verlaufs auf dem Außendurchmesser des Körpers 12 jeweils einen spiralförmigen Charakter hat, wobei dies insbesondere in Zusammenschau der Fig. 1A bis Fig. 1I mit Fig. 2 zu erkennen ist, die in einem Diagramm den Verlauf der Schaltkulissen 30 bis 33 qualitativ bei dem über 360° vollständig abgewickelten Mantel des Körpers 12 darstellt. Hierbei zeigt x₃₀ den Verlauf der Schaltkulisse 30, x₃₁ den Verlauf der Schaltkulisse 31, x₃₂ den Verlauf der Schaltkulisse 32 und x₃₃ den Verlauf der Schaltkulisse 33. Aus Fig. 2 kann auch der aneinander anknüpfende Verlauf der Schaltkulissen 30 und 32 und der Schaltkulissen 31 und 33 erschlossen werden. Ferner ist hierin auch, ebenso wie in den Fig. 1G und Fig. 1H, zu erkennen, dass die Schaltkulissen 32 und 33 in ein gemeinsames Ende übergehen.

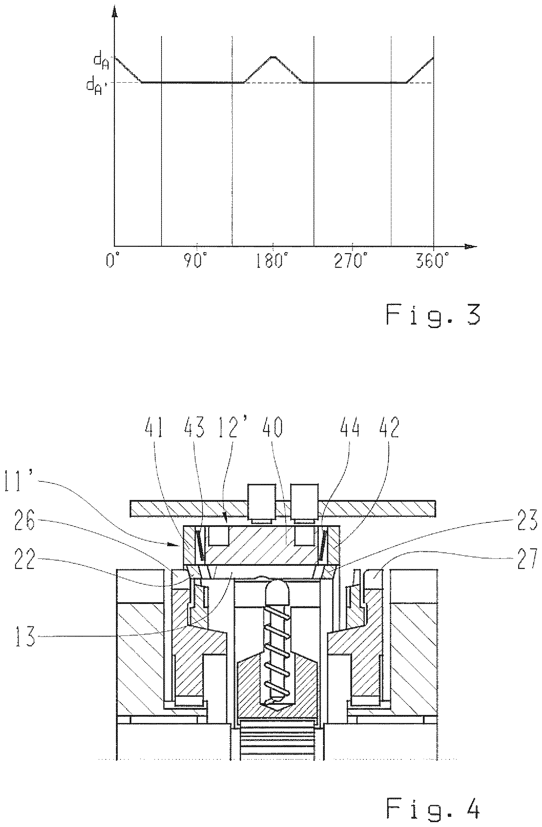

Des Weiteren ist jede der Schaltkulissen 30, 31, 32 und 33 an Enden mit Übergangsbereichen versehen, über welche der Außendurchmesser des ringförmigen Körpers 12 stetig in die jeweilige, nutartig gestaltete Schaltkulisse 30 bzw. 31 bzw. 32 bzw. 33 übergeht. Diese Gestaltung ist hierbei insbesondere in Zusammenschau mit dem in Fig. 3 dargestellten Diagramm nachzuvollziehen, die den Verlauf eines Durchmessers des Körpers 12 bei dessen vollständiger Umdrehung und einem Ablaufen der Schaltkulissen 30 und 32 des Schaltkulissenpaares 28 qualitativ zeigt. Wie hieraus zu erkennen ist, reduziert sich der hier mit d_{A} bezeichnete Außendurchmesser des Körpers 12 zunächst in einem ersten Übergang stetig auf einen geringeren, die Schaltkulisse 30 definierenden Durchmesser d_{A'}, der in einem zweiten Übergang, am Ende der Schaltkulisse 30 wieder auf den Außendurchmesser d_{A} des Körpers 12 ausläuft. In der Folge wiederholt sich dies dann mit einem dritten und einem vierten Übergang entsprechend für die Schaltkulisse 32.

Vorliegend werden die jeweiligen Schaltbewegungen des Schaltelements 11 durch die Schaltkulissenpaare 28 und 29 jeweils im Zusammenspiel mit jeweils einem zugehörigen Schaltstift 34 bzw. 35 eingeleitet, wobei die Schaltstifte 34 und 35 dabei auf Seiten eines zum Schaltelement 11 radial benachbart liegenden Getriebebauteils 36 in Form eines das Schaltelement 11 radial umgebenden Gehäuses 37 vorgesehen sind. Die Schaltstifte 34 und 35 können dabei jeweils aus einer, in Fig. 1A dargestellten Grundstellung in eine jeweilige Eingriffsstellung verschoben werden, in welcher der jeweilige Schaltstift 34 bzw. 35 in eine der zugehörigen Schaltkulisse 30 oder 32 bzw. 31 oder 33 radial einfassen kann. Zu diesem Zweck ist jeder der beiden Schaltstifte 34 und 35 radial verschiebbar in je einem Aktuator 38 bzw. 39 aufgenommen, wobei die beiden Aktuatoren 38 und 39 hierbei als elektrische Aktuatoren ausgestaltet und ebenfalls am Gehäuse 37 vorgesehen sind.

Eine Schaltbewegung des Schaltelements 11 aus einer, in Fig. 1A zu sehenden ersten Schaltstellung heraus in eine entgegengesetzte, zweite Schaltstellung soll nun im Folgenden anhand der Fig. 1A bis 1I beschrieben werden:

Um zunächst das Schaltelement 11 aus der in Fig. 1A dargestellten ersten Schaltstellung, in welcher das Schaltelement 11 formschlüssig mit dem Kupplungskörper 14 gekoppelt und damit auch die Getriebewelle 2 mit dem Zahnrad 6 drehfest verbunden ist, heraus in Richtung einer Neutralstellung zu bewegen, wird zunächst in einem ersten Schritt der Schaltstift 35 mittels des Aktuators 39 radial aus der in Fig. 1A dargestellten Grundstellung in eine, aus Fig. 1B hervorgehende Eingriffsstellung bewegt, in welcher der Schaltstift 35 in die erste Schaltkulisse 31 des zweiten Schaltkulissenpaares 29 einfassen kann. Sollten sich die erste Schaltkulisse 31 und der Schaltstift 35 in Umfangsrichtung bei Ausfahren des Schaltstifts 35 nicht in Überdeckung befinden, so läuft der Schaltstift 35 zunächst am Außendurchmesser des Schaltelements 11 an, bis er schließlich über den jeweiligen Übergangsbereich der ersten Schaltkulisse 31 in diese hineingleiten kann. Im Folgenden bewirkt der in axialer Richtung veränderliche Verlauf der Schaltkulisse 31, dass aufgrund der festen Position des Schaltstifts 39 eine axiale Verschiebung des Schaltelements 11 erzwungen wird.

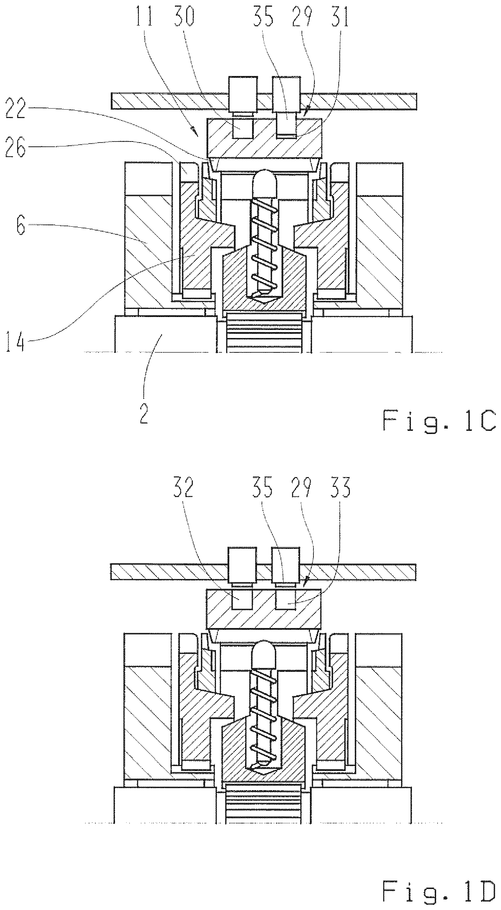

Im Folgenden wird das Schaltelement 11 aus der in Fig. 1B noch dargestellten ersten Schaltstellung in die, in Fig. 1C Neutralstellung verschoben, in welcher die Klaueninnenverzahnung 22 des Schaltelements 11 nicht mehr im Zahneingriff mit der Verzahnung 26 des Kupplungskörpers 14 steht. Hierdurch ist auch das Zahnrad 6 nicht mehr drehfest mit der Getriebewelle 2 verbunden und kann wieder relativ zu dieser rotieren. Zum Ende der ersten Schaltkulisse 31 des zweiten Schaltkulissenpaares 29 wird der Schaltstift 35 über den endseitigen Übergangsbereich der Schaltkulisse 31 aus dieser heraus in die in Fig. 1D zu sehende Grundstellung zurückbewegt. In dieser Position befindet sich der Schaltstift 35 zudem axial auf gleicher Höhe mit einem Übergangsbereich in die zweite Schaltkulisse 33 des zweiten Schaltkulissenpaares 29.

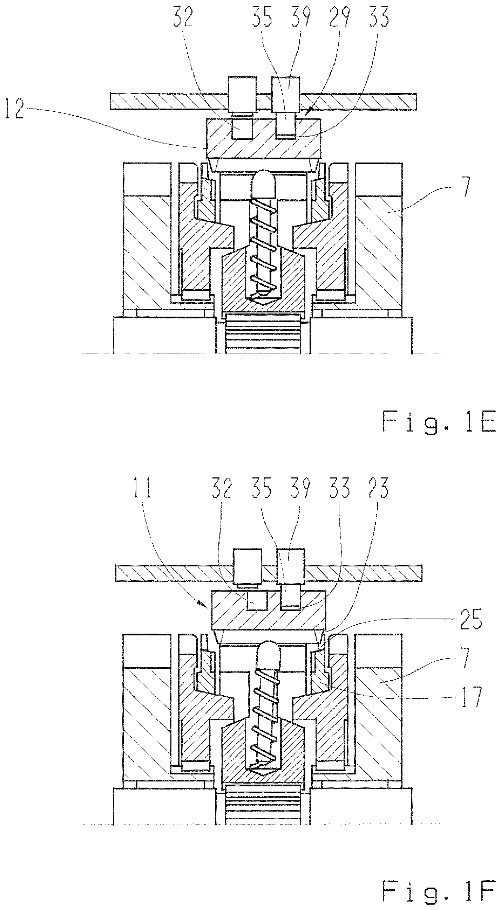

Um aus der Neutralstellung eine weitere Verschiebung des Schaltelements 11 in seine zweite Schaltstellung zu vollziehen, wird der Schaltstift 35 wiederum, wie in Fig. 1E zu sehen, mittels des Aktuators 39 aus der Grundstellung in seine Eingriffsstellung radial verschoben und kann in der Folge in die zweite Schaltkulisse 33 des zweiten Schaltkulissenpaares 29 einfassen. Sollten sich hierbei zu Beginn der radialen Verschiebung des Schaltstifts 35 die Schaltkulisse 33 und der Schaltstift 35 in Umfangsrichtung nicht in Überdeckung befinden, so läuft der Schaltstift 35 zunächst wieder am Außendurchmesser des Körpers 12 an, bis er über den Übergangsbereich in die Schaltkulisse 33 einlaufen kann.

Über den axial veränderlich gestalteten Abschnitt der zweiten Schaltkulisse 33 des zweiten Schaltkulissenpaares 29 wird das Schaltelement 11 aus der in Fig. 1E noch zu sehenden Neutralstellung axial in Richtung des Zahnrades 7 verschoben, wobei auf dem Weg hierbei zunächst die Klaueninnenverzahnung 23 mit ihren Dachschrägen auf die Dachschrägen der Sperrverzahnung 25 des Synchronringes 17 trifft. Dieser Zustand ist dabei in Fig. 1F dargestellt. In der Folge wird daraufhin eine Drehzahldifferenz auf die im Vorfeld bereits beschriebene Art und Weise abgebaut.

Daraufhin kann das Schaltelement 11 weiter in seine in Fig. 1G zu erkennende, zweite Schaltstellung verschoben werden und die Klaueninnenverzahnung 23 mit der Verzahnung 27 in Zahneingriff gelangen, wodurch das Schaltelement 11 nunmehr formschlüssig mit dem Kupplungskörper 15 gekoppelt und damit das Zahnrad 7 drehfest mit der Getriebewelle 2 verbunden ist. Der Schalstift 35 wird dabei über den endseitigen Übergangsbereich der zweiten Schaltkulisse 33 des zweiten Schaltkulissenpaares 29, welcher zugleich auch der endseitige Übergangsbereich der zweiten Schaltkulisse 32 des ersten Schaltkulissenpaares 28 ist, in seine Grundstellung zurückgeschoben, wie in Fig. 1H zu sehen. Wie schließlich aus Fig. 1I ersichtlich ist, überdeckt der Schaltstift 34 in der zweiten Schaltstellung des Schaltelements 11 axial mit der ersten Schaltkulisse 30 des ersten Schaltkulissenpaares 28, so dass hierdurch wieder eine Rückbewegung in die Neutralstellung und im weiteren Verlauf durch Zusammenspiel mit der zweiten Schaltkulisse 32 des ersten Schaltkulissenpaares 28 auch in die erste Schaltstellung vollzogen werden kann

Aus Fig. 4 geht des Weiteren eine schematische Darstellung einer erfindungsgemäßen Getriebeschalteinrichtung entsprechend einer zweiten bevorzugten Ausführungsform hervor. Diese entspricht dabei weitestgehend der im Vorfeld beschriebenen Variante, wobei als Unterschied ein Körper 12' eines Schaltelements 11' nicht einstückig ausgeführt ist, sondern sich aus einem die axial verlaufende Verzahnung 13 aufweisenden Grundteil 40 und zwei Schiebestücken 41 und 42 zusammensetzt. Die Schiebestücke 41 und 42 sind dem Grundteil 40 dabei jeweils auf axialen Stirnseiten vorgesetzt und bilden an jeweiligen Innendurchmessern die Klaueninnenverzahnungen 22 und 23 aus. Ferner sind die Schiebestücke 41 und 42 zwar jeweils drehfest mit dem Grundteil 40 verbunden, können aber über je ein zwischenliegendes Federelement 43 bzw. 44 jeweils axial gegenüber dem Grundteil 40 bewegt werden. Durch diese jeweilige axiale Beweglichkeit können Stöße, welche bei einem Abweisen des Schaltelements 11' beim Einspuren in die jeweilige Verzahnung 26 bzw. 27 aufgrund von Schalteffekten, wie Prellen oder Hochschaltkratzen, stattfinden können, kompensiert werden und werden folglich nicht auf den Grundteil 40 übertragen. Hierdurch kann eine Belastung der Bauteile vermindert werden.

Mittels der erfindungsgemäßen Ausgestaltungen einer Getriebeschalteinrichtung können Schaltbewegungen eines Schaltelements 11 bzw. 11' auf kompakte Art und Weise, sowie präzise und unabhängig gesteuert werden.

### Bezugszeichen

- 1: Getriebebauteil
- 2: Getriebewelle
- 3: Rotationsachse
- 4: Getriebebauteil
- 5: Getriebebauteil
- 6: Zahnrad
- 7: Zahnrad
- 8: Mitnahmeverzahnung
- 9: Synchronkörper
- 10: Verzahnung
- 11, 11': Schaltelement
- 12, 12': Körper
- 13: Verzahnung
- 14: Kupplungskörper
- 15: Kupplungskörper
- 16: Synchronring
- 17: Synchronring
- 18: Reibkonus
- 19: Reibkonus
- 20: Reibkonus
- 21: Reibkonus
- 22: Klaueninnenverzahnung
- 23: Klaueninnenverzahnung
- 24: Sperrverzahnungen
- 25: Sperrverzahnungen
- 26: Verzahnung
- 27: Verzahnung
- 28: erstes Schaltkulissenpaar
- 29: zweites Schaltkulissenpaar
- 30: erste Schaltkulisse
- 31: erste Schaltkulisse
- 32: zweite Schaltkulisse
- 33: zweite Schaltkulisse
- 34: Schaltstift
- 35: Schaltstift
- 36: Getriebebauteil
- 37: Gehäuse
- 38: Aktuator
- 39: Aktuator
- 40: Grundteil
- 41: Schiebestück
- 42: Schiebestück
- 43: Federelement
- 44: Federelement

- X₃₀: Verlauf Schaltkulisse
- X₃₁: Verlauf Schaltkulisse
- X₃₂: Verlauf Schaltkulisse
- X₃₃: Verlauf Schaltkulisse

- d_{A}: Außendurchmesser
- d_{A'}: Durchmesser

## Patentansprüche

1. Getriebeschalteinrichtung, umfassend ein erstes, rotativ antreibbares Getriebebauteil (1), auf welchem drehfest und axial verschiebbar ein Schaltelement (11; 11') mit einem ringförmigen Körper (12, 12') angeordnet ist, das axial in zumindest eine Schaltstellung bewegbar ist, in welcher jeweils das erste Getriebebauteil (1) mit je einem benachbart zu diesem angeordneten und hieran anbindbaren Getriebebauteil (4, 5) drehfest gekoppelt ist, wobei je eine axiale Schaltbewegung des Schaltelements (11; 11') in die zumindest eine Schaltstellung und/oder aus dieser heraus durch Zusammenspiel jeweils eines Schaltstifts (34, 35) mit jeweils mindestens einer zugehörigen, nutartigen Schaltkulisse (30, 31, 32, 33) auslösbar ist, die in axialer Richtung zumindest abschnittsweise veränderlich gestaltet ist, wobei das Schaltelement (11; 11') an seinem Außendurchmesser die mindestens eine zugehörige Schaltkulisse (30, 31, 32, 33) aufweist, während der jeweils eine Schaltstift (34, 35) radial verschiebbar und der mindestens einen zugehörigen Schaltkulisse (30, 31, 32, 33) radial gegenüberliegend an einem benachbart zum Schaltelement (11; 11') liegenden Getriebebauteil (36) angeordnet ist, wobei der jeweils eine Schaltstift (34, 35) über einen zugehörigen Aktuator (38, 39) jeweils radial zwischen einer Grundstellung und einer Eingriffsstellung bewegbar ist, in welcher der jeweils eine Schaltstift (34, 35) in die mindestens eine zugehörige Schaltkulisse (30, 31, 32, 33) einführbar ist, und wobei der jeweils eine Schaltstift (34, 35) und der zugehörige Aktuator (38, 39) an einem radial umliegend zum Schaltelement (11; 11') platzierten Gehäuse (37) vorgesehen sind, **dadurch gekennzeichnet, dass** das Gehäuse (37) einen ersten (34) und einen zweiten Schaltstift (35) trägt, von denen jedem je ein Schaltkulissenpaar (28, 29) seitens des Schaltelements (11; 11') zugeordnet ist, wobei sich jedes der Schaltkulissenpaare (28, 29) aus je zwei aneinander anknüpfenden Schaltkulissen (30, 31; 32, 33) zusammensetzt, die jeweils in den Außendurchmesser des Schaltelements (11; 11') eingebracht sind, und dass über den ersten Schaltstift (34) im Zusammenspiel mit einer ersten Schaltkulisse (30) des zugeordneten, ersten Schaltkulissenpaares (28) eine axiale Verschiebung des Schaltelements (11; 11') aus einer ersten Schaltstellung heraus in eine Neutralstellung, sowie im Zusammenspiel mit einer zweiten Schaltkulisse (32) des ersten Schaltkulissenpaares (28) eine axiale Verschiebung aus der Neutralstellung in eine zweite Schaltstellung hervorrufbar ist, wohingegen mittels des zweiten Schaltstifts (35) im Zusammenspiel mit einer ersten Schaltkulisse (31) des zugeordneten, zweiten Schaltkulissenpaares (29) eine axiale Bewegung des Schaltelements (11; 11') aus der zweiten Schaltstellung heraus in die Neutralstellung, sowie im Zusammenspiel mit einer zweiten Schaltkulisse (33) des zweiten Schaltkulissenpaares (29) eine axiale Verschiebung aus der Neutralstellung in die erste Schaltstellung darstellbar ist.

## Claims

1. Gear shifting system, comprising a first, rotatably drivable transmission component (1), on which a shift element (11; 11') with an annular body (12, 12') is arranged in a torque-proof and axially displaceable manner and is axially movable into at least one shift position, in which the first transmission component (1) is respectively coupled in a torque-proof manner to a transmission component (4, 5) that is arranged adjacent to it and can be attached to it, wherein an axial shifting movement of the shift element (11; 11') into the at least one shift position and/or out of it can be initiated by respective interaction of a shift pin (34, 35) with at least one associated, slot-like shift gate (30, 31, 32, 33), which is variably shaped at least in some portions in the axial direction, wherein the shift element (11; 11') has at its outer diameter the at least one associated shift gate (30, 31, 32, 33), while the respectively one shift pin (34, 35) is arranged radially displaceably and the at least one associated shift gate (30, 31, 32, 33) is arranged radially opposite on a transmission component (36) lying adjacent to the shift element (11; 11'), wherein the respectively one shift pin (34, 35) is movable by means of an associated actuator (38, 39) respectively radially between a basic position and an engagement position, in which the respectively one shift pin (34, 35) can be introduced into the at least one associated shift gate (30, 31, 32, 33), and wherein the respectively one shift pin (34, 35) and the associated actuator (38, 39) are provided on a housing (37) placed so as to lie radially around the shift element (11; 11'), **characterized in that** the housing (37) bears a first shift pin (34) and a second shift pin (35), each of which is assigned a respective pair of shift gates (28, 29) on the shift element (11; 11'), wherein each of the pairs of shift gates (28, 29) is made up of two shift gates (30, 31; 32, 33), which are linked to one another and are respectively incorporated in the outer diameter of the shift element (11; 11'), and **in that**, by means of the first shift pin (34) in interaction with a first shift gate (30) of the assigned, first pair of shift gates (28), an axial displacement of the shift element (11; 11') from a first shift position into a neutral position can be induced, and in interaction with a second shift gate (32) of the first pair of shift gates (28) an axial displacement from the neutral position into a second shift position can be induced, whereas, by means of the second shift pin (35) in interaction with a first shift gate (31) of the assigned, second pair of shift gates (29), an axial movement of the shift element (11; 11') from the second shift position into the neutral position can be provided, and in interaction with a second shift gate (33) of the second pair of shift gates (29) an axial displacement from the neutral position into the first shift position can be provided.

## Revendications

1. Système de changement de vitesses, comprenant un premier composant de transmission (1) pouvant être entraîné en rotation, sur lequel est disposé, de manière déplaçable axialement et de manière solidaire en rotation, un élément de commutation (11 ; 11') avec un corps annulaire (12, 12'), qui peut être déplacé axialement dans au moins une position de commutation dans laquelle à chaque fois le premier composant de transmission (1) est accouplé de manière solidaire en rotation à chaque fois à un composant de transmission (4, 5) disposé en position adjacente à celui-ci et pouvant être relié à celui-ci, un mouvement de commutation axial de l'élément de commutation (11 ; 11') dans l'au moins une position de commutation et/ou hors de celle-ci pouvant être déclenché à chaque fois par coopération d'une goupille de commutation respective (34, 35) avec au moins une coulisse de commutation respective associée en forme de rainure (30, 31, 32, 33), qui est configurée de manière au moins en partie variable dans la direction axiale, l'élément de commutation (11 ; 11') présentant, au niveau de son diamètre extérieur, l'au moins une coulisse de commutation associée (30, 31, 32, 33), tandis qu'une goupille de commutation respective (34, 35) est disposée de manière déplaçable radialement et que l'au moins une coulisse de commutation associée (30, 31, 32, 33) est disposée radialement à l'opposé au niveau d'un composant de transmission (36) situé de manière adjacente à l'élément de commutation (11 ; 11'), la goupille de commutation respective (34, 35) pouvant être déplacée par le biais d'un actionneur associé (38, 39) à chaque fois radialement entre une position de base et une position d'engagement dans laquelle la goupille de commutation respective (34, 35) peut être introduite dans l'au moins une coulisse de commutation associée (30, 31, 32, 33), et la goupille de commutation (34, 35) respective et l'actionneur associé (38, 39) étant prévus au niveau d'un boîtier (37) placé radialement sur la périphérie par rapport à l'élément de commutation (11 ; 11'), **caractérisé en ce que** le boîtier (37) porte une première (34) et une deuxième (35) goupille de commutation, dont chacune est associée à une paire de coulisses de commutation (28, 29) respective du côté de l'élément de commutation (11 ; 11'), chacune des paires de coulisses de commutation (28, 29) se composant de deux coulisses de commutation (30, 31 ; 32, 33) respectives se raccordant l'une à l'autre, qui sont introduites à chaque fois dans le diamètre extérieur de l'élément de commutation (11 ; 11'), et **en ce que**, par le biais de la première goupille de commutation (34), en coopération avec une première coulisse de commutation (30) de la première paire de coulisses de commutation associée (28), un déplacement axial de l'élément de commutation (11 ; 11') d'une première position de commutation dans une position neutre peut être réalisé, ainsi qu'en coopération avec une deuxième coulisse de commutation (32) de la première paire de coulisses de commutation (28), un déplacement axial de la position neutre dans une deuxième position de commutation peut être réalisé, tandis qu'au moyen de la deuxième goupille de commutation (35), en coopération avec une première coulisse de commutation (31) de la deuxième paire de coulisses de commutation associée (29), un mouvement axial de l'élément de commutation (11 ; 11') de la deuxième position de commutation dans la position neutre peut être réalisé, ainsi qu'en coopération avec une deuxième coulisse de commutation (33) de la deuxième paire de coulisses de commutation (29), un déplacement axial de la position neutre dans la première position de commutation peut être réalisé.
